# EUROPÄISCHE PATENTSCHRIFT

(11) **EP 1 738 600 B1**
(45) Veröffentlichungstag und Bekanntmachung des Hinweises auf die Patenterteilung: **18.06.2008**
(21) Anmeldenummer: 05733487.2
(22) Anmeldetag: 18.04.2005
(51) Int. Cl.: H04Q 7/30

(54) **AUFBAU EINER TRANSCODER-FREIEN-OPERATIONS-VERBINDUNG**
ESTABLISHMENT OF A TRANSCODER-FREE OPERATION CONNECTION
ETABLISSEMENT D'UNE LIAISON OPERATIONNELLE SANS TRANSCODEUR

(30) Priorität: 23.04.2004 DE 102004019987
(43) Veröffentlichungstag der Anmeldung: 03.01.2007
(73) Patentinhaber: SIEMENS AKTIENGESELLSCHAFT, 80333 München (DE)
(72) Erfinder: JUNGHANNS, Steffen, 89275 Elchingen (DE); OESTREICH, Stefan, 83607 Holzkirchen (DE); VALLENTIN, Claudia, 80639 München (DE)
(86) Internationale Anmeldenummer: PCT/EP2005/051687
(87) Internationale Veröffentlichungsnummer: WO 2005/104583

(56) Entgegenhaltungen:
- WO-A-03/103313
- WO-A-20/04028093
- US-A1- 2002 077 065
- TAE-GYU KANG ET AL: "SIP/SDP signaling of media gateway with transcoding function in converged network" ADVANCED COMMUNICATION TECHNOLOGY, 2004. THE 6TH INTERNATIONAL CONFERENCE ON PHOENIX PARK, KOREA FEB. 9-11, 2004, PISCATAWAY, NJ, USA,IEEE, Bd. 2, 9. Februar 2004 (2004-02-09), Seiten 842-845, XP010701551 ISBN: 89-5519-119-7
- "Universal Mobile Telecommunications System (UMTS); Transcoder Free Operation (3GPP TR 25.953 version 4.0.0 Release 4); ETSI TR 125 953" ETSI STANDARDS, EUROPEAN TELECOMMUNICATIONS STANDARDS INSTITUTE, SOPHIA-ANTIPO, FR, Bd. 3-R3, Nr. V400, März 2001 (2001-03), XP014005155 ISSN: 0000-0001

## Beschreibung

Die Erfindung betrifft ein Verfahren und eine Vorrichtung zum Aufbau einer Transcoder-freien-Operations-Verbindung (TrFO) zwischen zwei Kommunikationsendgeräten (MS) in einem Kommunikationsnetz.

Um Transcoder-freie-Operationen (TrFO = Transcoder free Operation) zu nutzen, muss zwischen den beteiligten Netzeinheiten (UEs, RNCs, MSCs) ein gemeinsamer Codec-Typ, bzw. im Fall eines Multirate-Codec-Types ein gemeinsames Set bzw. eine gemeinsame Konfiguration von Codec Modi (Codec Modes) ausgehandelt werden. Zu diesem Zweck hat eine Vermittlungseinheit (MSC) Zugriff auf eine Speichereinheit mit Informationen über den Funk-Netz-Controller (RNC). In der Speichereinheit ist u. a. ein Eintrag enthalten, der angibt welche Codec-Modi das Zugangsnetz (UTRAN) beziehungsweise der Funk-Netz-Controller (RNC) unterstützt. Diese Speichereinheit wird vom Betreiber per O&M-Einrichtung (Operation und Maintenance = Betrieb und Wartung) geladen und enthält eine Liste der Codec Modi. Solche Verfahren sind beispielsweise in WO 03/103313 A1 offenbart. US 2002/0077065 A1 gibt zudem ein Verfahren an, mit welchem ein Transcoder in einen Connection-Call einer TrFO eingefügt werden kann ohne dass eine Reinitialisierungsprozedur durchgeführt werden muss.

Das Zugangsnetz UTRAN mit Funk-Netz-Controllern RNC unterstützt jedoch nur ganz bestimmte Kombinationen von Codec-Modi. Eine Unterstützung aller Codec-Modi in allen Kombinationen wäre zu aufwändig und würde einen hohen Ressourcenaufwand bedeuten. Zwischen Kommunikationsendgeräten (MSs) und Vermittlungseinheiten (MSCs) werden zum Aushandeln des für die Transcoder-freie-Operations-Verbindung zu verwendenden Codec-Modus die nötigen Informationen an der luSchnittstelle durch eine NAS-signalisierung bzw. an der Nc-Schnittstelle durch eine BICC-Signalisierung ausgetauscht.

Ein Funk-Netz-Controller RNC 1 unterstützt zum Beispiel gemäß dem Inhalt in der Speichereinheit die Codec-Modi a, b, c, d, f in den Kombinationen (Codec-Modus-Konfiguration) a/b und b/c/d/f. Beim Aushandeln der Codec-Modi müssen die unterstützten Codec-Modus-Konfigurationen berücksichtigt werden. Derzeit werden nur einzelne Codec-MOdi ausgehandelt und keine Codec-Modi-Konfigurationen, die jeweils mehrere Codec-Modi umfassen. Die führt dazu, dass teilweise keine TrFO-verbindung hergestellt werden kann, denn bei der Vielzahl der möglichen Codec-Modi-Konfigurationen (zur Zeit sind 15 Codec-Modi-Konfigurationen definiert) ist die Wahrscheinlichkeit jedoch sehr groß, dass die beiden beim Aushandeln einer TrFO-Verbindung beteiligten Funk-Netz-Controller RNCs zwar eine Schnittmenge gleicher Modi unterstützen, aber diese nur in unterschiedlichen Codec-Modi-Konfigurationen. Wenn zum Beispiel der Funk-Netz-Controller RNC2 die Codec-Modi-Konfigurationen "a/b/c" und "f/g/h" unterstützt, kann derzeit keine Transcoder-freie-Operations-Verbindung zwischen dem Funk-Netz-Controller RUCL, der a/b und b/c/d/f unterstützt, und dem Funk-Netz-Controller RNC2 hergestellt werden.

Die Aufgabe der vorliegenden Erfindung ist darin zu sehen, eine einfache und effiziente Möglichkeit für die Erhöhung der Wahrscheinlichkeit, dass eine Transcoder-freie-Operations-Verbindung zwischen zwei Kommunikationsendgeräten aufgebaut werden kann, anzubieten.

Die Aufgabe wird erfindungsgemäß jeweils durch die Gegenstände der unabhängigen Patentansprüche gelöst. Weiterbildungen der Erfindung sind in den Unteransprüchen angegeben.

Ein Kern der Erfindung besteht darin, dass ein Funk-Netz-Controller, der sämtliche Untermengen einer unterstützten Codec-Modus-Konfiguration unterstützt, bei einer Anfrage von einer Vermittlungseinheit betreffend die Verwendung mindestens einer Untermenge einer Codec-Modus-Konfiguration für den Aufbau einer Transcoder-freien-Operations-Verbindung überprüft, ob die mindestens eine angefragte Untermenge unterstützt wird. Eine derartige Untermenge umfasst mindestens einen, vorzugsweise mindestens zwei Codec-Modi einer Codec-MOdus-Konfiguration, aber weniger als alle Codec-Modi der Codec-Modus-Konfiguration. Eine Transcoder-freie-Operations-Verbindung wird dann aufgebaut, wenn das Überprüfungsergebnis lautet, dass mindestens diese eine Untermenge unterstützt wird. Um die Kompatibilität zur Iu-Schnittstelle zu gewährleisten, signalisiert der Funk-Netz-Controller dem Kommunikationsendgerät mit einer geeigneten Nachricht, dass der Versand von Daten in Uplink-Richtung (vom Kommunikationsendgerät zum Funk-Netz-Controller) nur mit der mindestens einen unterstützten, von der Vermittlungseinheit angefragten, Untermenge einer Codec-Modus-Konfiguration zu geschehen hat. Ein Vorteil der Erfindung besteht darin, dass die Wahrscheinlichkeit für das Zustandekommen einer Transcoder-freien-Operations-Verbindung zwischen zwei Kommunikationsendgeräten auf eine einfache und effiziente Weise deutlich erhöht werden kann.

Die Erfindung wird anhand eines in einer Figur dargestellten Ausführungsbeispiels näher erläutert. Dabei zeigen
- Figur 1: eine vereinfachte Netzarchitektur für das bekannte Aushandeln eines Codec-Modus für eine Verbindung zwischen zwei Kommunikationsendgeräten,
- Figur 2: eine vereinfachte Netzarchitektur für das erfindungsgemäße Verfahren,
- Figur 3: eine erfindungsgemäße Vorrichtung zum Durchführen des Verfahrens.

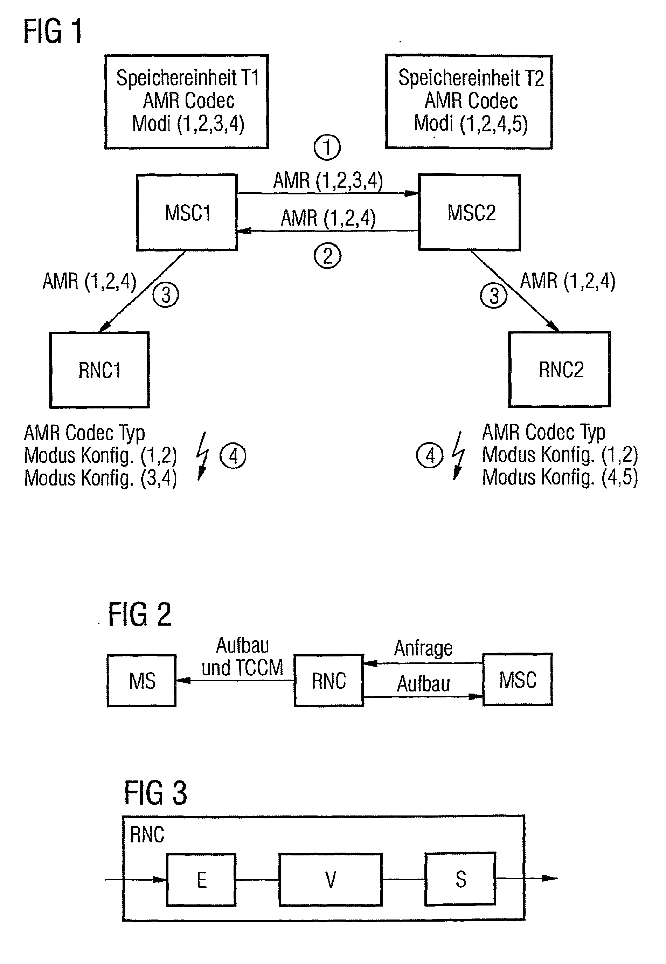

Figur 1 zeigt eine vereinfachte Netzarchitektur für das Aushandeln eines Codec-Modus für eine Verbindung zwischen zwei Kommunikationsendgeräten UE in zum Beispiel einem zellularen Mobilfunknetz, wie dem UMTS-Netz. Der Funk-Netz-Controller RNC1 unterstützt zwei verschiedene Codec-Modi-Konfigurationen (Modus 1, 2 und Modus 3, 4). In der RNC1-Speichereinheit T1 der kontrollierenden Vermittlungseinheit MSCl sind dagegen alle AMR-Modi 1 bis 4 eingetragen. Die Codec-Modi-Konfiguratlonen, die der Funk-Netz-Controller RNC1 unterstützt, bleiben unberücksichtigt. Der zweite Funk-Netz-Controller RNC2 unterstützt ebenfalls zwei verschiedene Codec-Modi-Konfigurationen (Modus 1, 2 und Modus 4, 5). In der RNC2-Speichereinheit T2 der zweiten Vermittlungseinheit MSC2 bleiben die Codec-Modi-Konfigurationen im Funk-Netz-Controller RNC2 wiederum unberücksichtigt. In der RNC2-Speichereinheit T2 sind wieder alle AMR Modi 1 bis 5 eingetragen. Zur Codec-Aushandlung überträgt die sendende (originating) Seite mit der Vermittlungseinheit MSCl, der RNC1-Speichereinheit T1 und dem Funk-Netz-Controller RNC1 alle unterstützten Codec Typen und Modi zum Beispiel in Form einer Liste, Tabelle oder Ähnlichem zur empfangenden (terminating) Seite mit der Vermittlungseinheit MSC2, der RNC2-Speichereinheit T2 und dem Funk-Netz-Controller RNC2 (1). Auf der empfangenden Seite wird diese Liste, Tabelle oder Ähnliches der unterstützten Codec Typen und Modi um die auf der empfangenden Seite nicht unterstützten Typen und Modi reduziert, ein Codec-Modus mit einer Codec-Modus-Konfiguration ausgewählt und zur sendenden Seite zurückgesendet (2). Mit dem ausgewählten Codec-Modus wird nun eine RAB-Zuweisung (Radio Access Bearer - Assignment) in Richtung des Funk-Netz-Controllers RNC1 angestoßen (3). Da die Funk-Netz-Controller RNC1 und RNC2 die ausgewählte Codec-Modus-Konfiguration (1, 2, 4) jedoch nicht unterstützen, kommt es zu einer Ablehnung der RAB-Zuweisung (4). Damit kann keine Verbindung mit einer transcoderfreien Operation zwischen zwei Kommunikationsendgeräten UE, wie zum Beispiel Mobilfunkendgeräten, mobilen Computern, mobilen Organizern etc. hergestellt werden.

Figur 2 beschreibt das erfindungsgemäße Verfahren in einem Kommunikationsnetz, vorzugsweise einem zellularen Mobilfunknetz. Erhält ein Funk-Netz-Controller RNC eine Anfrage betreffend die Verwendung einer Untermenge (zum Beispiel a/b) einer Codec-Modus-Konfiguration (zum Beispiel a/b/c) zum Aufbau einer Transcoder-freien-Operations-Verbindung zwischen zwei Kommunikationsendgeräten MS, überprüft er (RNC), ob die angefragte Untermenge a/b unterstützt wird. Die Anfrage kann in Form einer RAB-Anfrage (Radio-Access-Bearer-Request) von der Vermittlungseinheit MSC an den Funk-Netz-Controller RNC gestellt werden. Wird die angefragte Untermenge vom Funk-Netz-Controller RNC unterstützt, wird zur Vermittlungseinheit MSC eine Verbindung, wie zum Beispiel eine RAB-Verbindung (Radio Access Bearer Verbindung), unter Verwendung der angefragten Untermenge a/b einer Codec-Modus-Konfiguration aufgebaut. Zu einer Luftschnittstelle hin beziehungsweise zum Kommunikationsendgerät MS hin wird vom Funk-Netz-Controller RNC eine Verbindung mittels der Codec-Modus-Konfiguration a/b/c aufgebaut, da der Funk-Netz-Controller nur für die Codec-Modus-Konfiguration alle erforderlichen Daten (zum Beispiel Transportformate, SIR-Targets (SIR-Ziele) etc.) gespeichert hat. Um jedoch Kompatibilität zur Iu-Schnittstelle zu gewährleisten, auf der der Modus c nicht erlaubt ist, schränkt der Funk-Netz-Controller RNC mit einer Signalisierungsnachricht, zum Beispiel einer Transport-Kombinations-Kontroll-Nachricht CCM (Transport Combination Control Message = TCCM), einer Funk-Ressourcen-Kontroll-Signalisierung etc., die Codec-Modus-Konfiguration auf eine erlaubte, mit der Vermittlungseinheit ausgehandelte, Untermenge a/b ein. Die Signalisierungsnachricht bzw. mehrere Signalisierungsnachrichten kann/können auch in mehreren Teilen bzw. Schritten dem Kommunikationsendgerät MS signalisiert werden. So könnte in einem ersten Schritt bzw. in einem ersten Teil der Signalisierungsnachricht dem Kommunikationsendgerät MS die zu verwendende Codec-Modus-Konfiguration mit mindestens zwei Codec-Modi übermittelt werden und in einem zweiten Schritt bzw. in einem zweiten Teil einer Signalisierungsnachricht könnte dem Kommunikationsendgerät MS die zu verwendende Untermenge einer Codec-Modus-Konfiguration mitgeteilt werden. Das Kommunikationsendgerät MS muss sich bei der Verwendung eines Codec-Modes auf die signalisierte Untermenge beschränken. In diesem Beispiel darf das Kommunikationsendgerät beim Versand von Daten in Uplink-Richtung nur die Modi a und/oder b verwenden. Mit diesem Verfahren ist es nun möglich, dass sich die Wahrscheinlichkeit für das Zustandekommen einer TrFO-Verbindung zwischen zwei Kommunikationsendgeräten MS deutlich erhöht, da das Zugangsnetz UTRAN mit u. a. Funk-Netz-Controllern RNC nicht nur Codec-Modi-Konfigurationen, sondern auch deren Untermengen unterstützen kann und damit kann die Qualität des Dienstes erheblich gesteigert werden.

Figur 3 zeigt eine erfindungsgemäße Vorrichtung zum Durchführen des Verfahrens, wie es in Figur 2 beschrieben wurde. Die Vorrichtung, idealerweise ein Funk-Netz-Controller RNC, besitzt zur mobilen Kommunikation mit weiteren Netzeinheiten (MS, MSC) eine Sendeeinheit (S) und eine Empfangseinheit (E). Eine Verarbeitungseinheit (V) im Funk-Netz-Controller RNC wird zum Überprüfen einer von einer Vermittlungseinheit MSC gesendeten Anfrage betreffend die Verwendung einer Untermenge einer Codec-Modus-Konfiguration für den Aufbau einer Transcoder-freien-Operations-Verbindung zwischen zwei Kommunikationsendgeräten MS verwendet. Des weiteren baut die Verarbeitungseinheit sowohl eine Verbindung zur anfragenden Vermittlungseinheit MSC als auch zum Kommunikationsendgerät auf, falls die angefragte Untermenge unterstützt wird. Ausserdem wird von der Verarbeitungseinheit (V) über die Sendeeinheit (S) eine Signalisierungsnachricht an das Kommunikationsendgerät MS betreffend die zu verwendende Untermenge der Codec-Modus-Konfiguration für den Versand von Daten zum Funk-Netz-Controller gesendet.

## Patentansprüche

1. Verfahren zum Aufbau einer Transcoder-freien-Operations-Verbindung (TrFO) zwischen zwei kommunikationsendgeräten (MS) in einem Kommunikationsnetz,
**dadurch gekennzeichnet,**
**dass** bei einer von einer Vermittlungseinheit (MSC) gesendeten Anfrage betreffend die Verwendung mindestens einer Untermenge mindestens einer Codec-Modus-Konfiguration für den Aufbau einer Transcoder-freien-Operations-Verbindung ein Funk-Netz-Controller (RNC) überprüft, ob die mindestens eine angefragte Untermenge vom Funk-Netz-Controller (RNC) unterstützt wird, dass bei Unterstützung der mindestens einen Untermenge einer Codec-Modus-Konfiguration durch den Funk-Netz-Controller (RNC) eine Transeoder-freie-Operations-Verbindung zur Vermittlungseinheit (MSC) und einem Kommunikationsendgerät (MS) aufgebaut wird und
**dass** vom Funk-Netz-Controller (RNC) an das Kommunikationsendgerät (MS) mindestens eine Nachricht betreffend die zu verwendende Untermenge der Codec-Modus-Konfiguration für den Versand von Daten signalisiert wird.

2. Verfahren nach Anspruch 1,
**dadurch gekennzeichnet,**
**dass** vom Funk-Netz-Controller (RNC) an das Kommunikationsendgerät (MS) zumindest ein Teil mindestens einer Nachricht betreffend die zu verwendende Codec-Modus-Konfiguration mit mindestens zwei Codec Modi für den Versand von Daten in Uplink-Richtung signalisiert wird.

3. Verfahren nach Anspruch 2,
**dadurch gekennzeichnet,**
**dass** vom Funk-Netz-Controller (RNC) an das Kommunikationsendgerät (MS) zumindest ein weiterer Teil mindestens einer Nachricht betreffend die mindestens eine zu verwendende Untermenge einer Codec-Modus-Konfiguration für den Versand von Daten in Uplink-Richtung signalisiert wird.

4. Verfahren nach einem der vorhergehenden Ansprüche,
**dadurch gekennzeichnet,**
**dass** ein Funk-Netz-Controller sämtliche Untermengen einer unterstützten Codec-Modus-Konfiguration unterstützt.

5. Verfahren nach einem der vorhergehenden Ansprüche,
**dadurch gekennzeichnet,**
**dass** vom Funk-Netz-Controller (RNC) eine Transcoder-freie-Operations-Verbindung zum Kommunikationsendgerät (MS) unter Verwendung einer vom Funk-Netz-controller (RNC) unterstützten Codec-Modus-Konfiguration aufgebaut wird.

6. Verfahren nach einem der vorhergehenden Ansprüche,
**dadurch gekennzeichnet,**
**dass** eine Codec-Modus-Konfiguration eine Kombination aus mindestens zwei Codec-Modi repräsentiert.

7. Verfahren nach einem der vorhergehenden Ansprüche,
**dadurch gekennzeichnet,**
**dass** das Kommunikationsnetz ein zellulares Mobilfunknetz ist.

8. Verfahren nach einem der vorhergehenden Ansprüche,
**dadurch gekennzeichnet,**
**dass** zur Signalisierung an das Kommunikationsgerät (MS) eine Funk-Ressourcen-Kontroll-Signalisierung vom Funk-Netz-Controller (RNC) verwendet wird.

9. Verfahren nach einem der vorhergehenden Ansprüche,
**dadurch gekennzeichnet,**
**dass** als Kommunikationsendgerät ein Mobilfunkendgerät, ein mobiler Computer und/oder ein mobiler Organizer verwendet wird.

10. Vorrichtung zum Aufbau einer Transcoder-freien-Operations-Verbindung (TrFO) zwischen zwei Kommunikationsendgeräten (MS) in einem Kommunikationsnetz,
- mit einer Sendeeinheit (S) und einer Empfangseinheit (E) eines Funk-Netz-Controllers (RNC) zur mobilen Kommunikation mit weiteren Netzeinheiten (MS, MSC),
**gekennzeichnet durch**
- eine Verarbeitungseinheit (V) im Funk-Netz-Controller (RNC) zum Überprüfen einer von einer Vermittlungseinheit (MSC) gesendeten Anfrage betreffend die Verwendung einer Untermenge einer Codec-Modus-Konfiguration für den Aufbau einer Transcoder-freien-Operations-Verbindung dahingehend, ob die angefragte Untermenge vom Funk-Netz-Controller (RNC) unterstützt wird,
- eine Verarbeitungseinheit (V) im Funk-Netz-Controller (RNC) zum Aufbauen einer Transcoder-freie-Operations-Verbindung zur Vermittlungseinheit (MSC) im Falle einer Unterstützung der Untermenge einer Codec-Modus-Konfiguration **durch** den Funk-Netz-Controller (RNC),
- eine Verarbeitungseinheit (V) im Funk-Netz-Controller (RNC) zum Signalisieren einer Nachricht betreffend die zu verwendende Untermenge der Codec-Modus-Konfiguration für den Versand von Daten über die Sendeeinheit (S) an ein Kommunikationsendgerät (MS).

11. Vorrichtung nach Anspruch 10,
**dadurch gekennzeichnet,**
**dass** der Funk-Netz-Controller (RNC) zum Signalisieren zumindest eines Teiles mindestens einer Nachricht betreffend die zu verwendende Codec-Modus-Konfiguration mit mindestens zwei Codec Modi für den Versand von Daten in Uplink-Richtung an das Kommunikationsendgerät (MS) vorgesehen ist.

12. Vorrichtung nach Anspruch 11,
**dadurch gekennzeichnet,**
**dass** der Funk-Netz-Controller (RNC) an das Kommunikationsendgerät (MS) zum Signalisieren zumindest eines weiteren Teiles mindestens einer Nachricht betreffend die mindestens eine zu verwendende Untermenge einer Codec-Modus-Konfiguration für den Versand von Daten in Uplink-Richtung vorgesehen ist.

13. Vorrichtung nach einem der Ansprüche 10 bis 12,
**dadurch gekennzeichnet,**
**dass** als Kommunikationsnetz ein zellulares Mobilfunknetz vorgesehen ist.

14. Vorrichtung nach einem der Ansprüche 10 bis 13,
**dadurch gekennzeichnet,**
**dass** als Kommunikationsendgerät ein Mobilfunkendgerät, ein mobiler Computer und/oder ein mobiler Organizer vorgesehen ist.

15. Vorrichtung nach einem der Ansprüche 10 bis 14,
**dadurch gekennzeichnet,**
**dass** eine Codec-Modus-Konfiguration eine Kombination aus mindestens zwei Codec-Modi ist.

## Claims

1. Method for establishing a transcoder-free operation connection (TrFO) between two communication terminals (MS) in a communication network,
**characterised in that**
in the event of a request sent by a switching unit (MSC) relating to the use of at least one subset of at least one codec mode configuration for the establishment of a transcoder-free operation connection, a radio network controller (RNC) checks whether the at least one requested subset is supported by the radio network controller (RNC), if the at least one subset of a codec mode configuration is supported by the radio network controller (RNC), a transcoder-free operation connection is established to the switching unit (MSC) and a communication terminal (MS) and
at least one message relating to the subset of the codec mode configuration to be used for the transmission of data is signalled from the radio network controller (RNC) to the communication terminal (MS).

2. Method according to claim 1,
**characterised in that**
at least a part of at least one message relating to the codec mode configuration mode with at least two codec modes to be used for the transmission of data is signalled in the uplink direction from the radio network controller (RNC) to the communication terminal (MS).

3. Method according to claim 2,
**characterised in that**
at least a further part of at least one message relating to the at least one subset of a codec mode configuration mode to be used for the transmission of data is signalled in the uplink direction from the radio network controller (RNC) to the communication terminal (MS)

4. Method according to one of the preceding claims,
**characterised in that**
a radio network controller supports all the subsets of a supported codec mode configuration.

5. Method according to one of the preceding claims,
**characterised in that**
a transcoder-free operation connection to the communication terminal (MS) is established by the radio network controller (RNC) using a codec mode configuration supported by the radio network controller (RNC).

6. Method according to one of the preceding claims,
**characterised in that**
a codec mode configuration represents a combination of at least two codec modes.

7. Method according to one of the preceding claims,
**characterised in that**
the communication network is a cellular mobile radio network.

8. Method according to one of the preceding claims,
**characterised in that**
a radio resource control signalling is used by the radio network controller (RNC) for signalling to the communication terminal (MS).

9. Method according to one of the preceding claims,
**characterised in that**
a mobile radio terminal, a mobile computer and/or a mobile. organiser is used as the communication terminal.

10. Device for establishing a transcoder-free operation connection (TrFO) between two communication terminals (MS) in a communication network,
- with a transmit unit (S) and a receive unit (E) of a radio network controller (RNC) for mobile communication with further network units (MS, MSC),
**characterised by**
- a processing unit (V) in the radio network controller (RNC) for verifying a request sent by a switching unit (MSC) relating to the use of a subset of a codec mode configuration for the establishment of a transcoder-free operation connection to determine whether the requested subset is supported by the radio network controller (RNC),
- a processing unit (V) in the radio-network controller (RNC) for establishing a transcoder-free operation connection to the switching unit (MSC) in the event that the subset of a codec mode configuration is supported by the radio network controller (RNC),
- a processing unit (V) in the radio network controller (RNC) for signalling a message relating to the subset of the codec mode configuration to be used for the transmission of data by way of the transmit unit (S) to a communication terminal (MS).

11. Device according to claim 10,
**characterised in that**
the radio network controller (RNC) is provided to signal at least a part of at least one message relating to the codec mode configuration with at least two codec modes to be used for the transmission of data in the uplink direction to the communication terminal (MS).

12. Device according to claim 11,
**characterised in that**
the radio network controller (RNC) is provided to signal at least a further part of at least one message relating to the at least one subset of a codec mode configuration to be used for the transmission of data in the uplink direction to the communication terminal (MS).

13. Device according to one of claims 10 to 12,
**characterised in that**
a cellular mobile radio network is provided as the communication network.

14. Device according to one of claims 10 to 13,
**characterised in that**
a mobile radio terminal, a mobile computer and/or a mobile organiser is provided as the communication terminal.

15. Device according to one of claims 10 to 14,
**characterised in that**
a codec mode configuration is a combination of at least two codec modes.

## Revendications

1. Procédé pour l'établissement d'une liaison opérationnelle sans transcodeur (TrFO) entre deux terminaux de communication (MS) dans un réseau de communication,
**caractérisé par le fait que**
lors d'une demande émise par une unité de commutation (MSC) et concernant l'utilisation d'au moins un sous-ensemble d'au moins une configuration de mode de codec pour l'établissement d'une liaison opérationnelle sans transcodeur, un contrôleur de réseau radio (RNC) vérifie si le ou les sous-ensembles demandés sont supportés par le contrôleur de réseau radio (RNC),
lorsque le ou les sous-ensembles d'une configuration de mode de codec sont supportés par le contrôleur de réseau radio (RNC), on établit une liaison opérationnelle sans transcodeur vers l'unité de commutation (MSC) et vers un terminal de communication (MS), et
le contrôleur de réseau radio (RNC) signale au terminal de communication (MS) au moins un message concernant le sous-ensemble à utiliser de la configuration de mode de codec pour l'émission de données.

2. Procédé selon la revendication 1,
**caractérisé par le fait que**
le contrôleur de réseau radio (RNC) signale au terminal de communication (MS) au moins une partie d'au moins un message concernant la configuration de mode de codec à utiliser avec au moins deux modes de codec pour l'émission de données dans le sens montant.

3. Procédé selon la revendication 2,
**caractérisé par le fait que**
le contrôleur de réseau radio (RNC) signale au terminal de communication (MS) au moins une autre partie d'au moins un message concernant le ou les sous-ensembles à utiliser d'une configuration de mode de codec pour l'émission de données dans le sens montant.

4. Procédé selon l'une des revendications précédentes,
**caractérisé par le fait que**
un contrôleur de réseau radio supporte tous les sous-ensembles d'une configuration de mode de codec supportée.

5. Procédé selon l'une des revendications précédentes,
**caractérisé par le fait que**
le contrôleur de réseau radio (RNC) établit une liaison opérationnelle sans transcodeur vers le terminal de communication (MS) en utilisant une configuration de mode de codec supportée par le contrôleur de réseau radio (RNC).

6. Procédé selon l'une des revendications précédentes,
**caractérisé par le fait que**
une configuration de mode de codec représente une combinaison d'au moins deux modes de codec.

7. Procédé selon l'une des revendications précédentes,
**caractérisé par le fait que**
le réseau de communication est un réseau de radiocommunication mobile cellulaire.

8. Procédé selon l'une des revendications précédentes,
**caractérisé par le fait que**,
pour la signalisation au terminal de communication (MS), le contrôleur de réseau radio (RNC) utilise une signalisation de contrôle de ressources radio.

9. Procédé selon l'une des revendications précédentes,
**caractérisé par le fait que**,
comme terminal de communication, on utilise un terminal de radiocommunication mobile, un ordinateur mobile et/ou un organiseur mobile.

10. Dispositif pour l'établissement d'une liaison opérationnelle sans transcodeur (TrFO) entre deux terminaux de communication (MS) dans un réseau de communication,
- avec une unité d'émission (S) et une unité de réception (E) d'un contrôleur de réseau radio (RNC) pour la communication mobile avec d'autres unités de réseau (MS, MSC),
**caractérisé par**
- une unité de traitement (V) dans le contrôleur de réseau radio (RNC) pour vérifier une demande émise par une unité de commutation (MSC) et concernant l'utilisation d'au moins un sous-ensemble d'au moins une configuration de mode de codec pour l'établissement d'une liaison opérationnelle sans transcodeur afin de savoir si le sous-ensemble demandé est supporté par le contrôleur de réseau radio (RNC),
- une unité de traitement (V) dans le contrôleur de réseau radio (RNC) pour établir une liaison opérationnelle sans transcodeur vers l'unité de commutation (MSC) lorsque le sous-ensemble d'une configuration de mode de codec est supporté par le contrôleur de réseau radio (RNC), et
- une unité de traitement (V) dans le contrôleur de réseau radio (RNC) pour signaler à un terminal de communication (MS) un message concernant le sous-ensemble à utiliser de la configuration de mode de codec pour l'émission de données par l'intermédiaire de l'unité d'émission (S).

11. Dispositif selon la revendication 10,
**caractérisé par le fait que**
le contrôleur de réseau radio (RNC) est prévu pour signaler au terminal de communication (MS) au moins une partie d'au moins un message concernant la configuration de mode de codec à utiliser avec au moins deux modes de codec pour l'émission de données dans le sens montant.

12. Dispositif selon la revendication 11,
**caractérisé par le fait que**
le contrôleur de réseau radio (RNC) est prévu pour signaler au terminal de communication (MS) au moins une autre partie d'au moins un message concernant le ou les sous-ensembles à utiliser d'une configuration de mode de codec pour l'émission de données dans le sens montant.

13. Dispositif selon l'une des revendications 10 à 12,
**caractérisé par le fait que**
un réseau de radiocommunication mobile cellulaire est prévu comme réseau de communication.

14. Dispositif selon l'une des revendications 10 à 13,
**caractérisé par le fait que**
un terminal de radiocommunication mobile, un ordinateur mobile et/ou un organiseur mobile est prévu comme terminal de communication.

15. Dispositif selon l'une des revendications 10 à 14,
**caractérisé par le fait que**
une configuration de mode de codec est une combinaison d'au moins deux modes de codec.
